# EUROPEAN PATENT APPLICATION

(11) **EP 3 865 992 A2**
(43) Date of publication of application: **18.08.2021**
(21) Application number: 21178521.7
(22) Date of filing: 09.06.2021
(51) Int. Cl.: G06F 3/06

(54) **DISTRIBUTED BLOCK STORAGE SYSTEM, METHOD, APPARATUS AND MEDIUM**

(30) Priority: 25.12.2020 CN 202011562809
(71) Applicant: BEIJING BAIDU NETCOM SCIENCE AND TECHNOLOGY CO. LTD., 100085 Beijing (CN)
(72) Inventor: CHEN, Cheng, Beijing, 100085 (CN); ZHENG, Pengfei, Beijing, 100085 (CN)
(74) Representative: Laufhütte, Dieter

(57) **Abstract**

The present disclosure discloses a distributed block storage system, a method, an apparatus and a medium, and relates to the technical field of data storage, in particular to cloud storage, cloud computing and other fields. The distributed block storage system includes a front-end storage node and a rear-end storage node. The front-end storage node includes at least one front-end disk. The rear-end storage node includes at least one rear-end disk. The performance of reading and writing of the front-end disk is higher than that of the rear-end disk. The method includes: conducting operation of reading and writing of operational data on the front-end disk according to a request of reading and writing sent by the client; and performing processing of transmission of the operational data between the front-end disk and the rear-end disk when preset transmission conditions are met. The present disclosure can improve the performance of reading and writing of the distributed block storage system.

## Description

### TECHNICAL FIELD

The present disclosure relates to the technical field of data storage, and specifically relates to cloud computing, cloud storage and other technical fields, in particular to a distributed block storage system, a method, an apparatus and a medium.

### BACKGROUND

Cloud computing refers to accessing to an elastic expandable shared physical or virtual resource pool via a network. The resources may include servers, operation systems, networks, software, applications, storage devices, etc., and can be in a technical system that manages and deploys the resources as required in a self-service manner. The cloud computing technology can provide an efficient and powerful data processing capacity for technical applications (such as, the artificial intelligence and block chain) and model training.

Distributed block storage is a type of data storage technology, which dispersedly stores data in disks of several machines. In the related art, a distributed block storage system includes high-performance disks and low-performance disks, the high-performance disks store hot data, and the low-performance disks store cold data.

### SUMMARY

The present disclosure provides a distributed block storage system, a method, an apparatus, a device and a medium.

According to one aspect of the present disclosure, a method of reading and writing of a distributed block storage system is provided. The distributed block storage system includes a front-end storage node and a rear-end storage node. The front-end storage node includes at least one front-end disk. The rear-end storage node includes at least one rear-end disk. Performance of reading and writing of the front-end disk is higher than that of the rear-end disk. The method includes: conducting operation of reading and writing of operational data on the front-end disk according to a request of reading and writing sent by the client; and performing processing of transmission of the operational data between the front-end disk and the rear-end disk when preset transmission conditions are met.

According to another aspect of the present disclosure, an apparatus of reading and writing of a distributed block storage system is provided. The distributed block storage system includes a front-end storage node and a rear-end storage node. The front-end storage node includes at least one front-end disk. The rear-end storage node includes at least one rear-end disk. Performance of reading and writing of the front-end disk is higher than that of the rear-end disk. The apparatus includes: a response unit, used to conduct the operation of reading and writing of operational data on the front-end disk according to a request of reading and writing sent by the client; and a transmission unit, used to perform the processing of transmission of the operational data between the front-end disk and the rear-end disk when preset transmission conditions are met.

According to another aspect of the present disclosure, a front-end storage node is provided. The front-end storage node includes: at least one front-end disk; and, the apparatus of any of the aforementioned aspects that conducts operation on the front-end disk.

According to another aspect of the present disclosure, a distributed block storage system is provided. The distributed block storage system includes: the front-end storage node of any one of the aforementioned aspects.

According to another aspect of the present disclosure, a non-transient computer readable storage medium storing computer instructions is provided, wherein the computer instructions cause the computer to perform the method of any of the aforementioned aspects.

According to another aspect of the present disclosure, a computer program product comprising instructions is provided, wherein when executed by a processor, the instructions cause the computer to perform the method of any of the aforementioned aspects.

The technical solution of the present disclosure can improve the performance of reading and writing of the distributed block storage system.

It should be understood that the content described in this part is not intended to identify key or important features of embodiments of the present disclosure, neither does it limit the scope of the present disclosure. Other features of the present disclosure will become easy to understand in the following content of the description.

### BRIEF DESCRIPTION OF THE DRAWINGS

The drawings facilitate the understanding of the present solution, instead of limiting the present disclosure. Figures are as follows:
Fig. 1 is a schematic diagram of the first embodiment of the present disclosure.
Fig. 2 is a schematic diagram of the second embodiment of the present disclosure.
Fig. 3 is a schematic diagram of the third embodiment of the present disclosure.
Fig. 4 is a schematic diagram of the fourth embodiment of the present disclosure.
Fig. 5 is a schematic diagram of the fifth embodiment of the present disclosure.
Fig. 6 is a schematic diagram of the sixth embodiment of the present disclosure.
Fig. 7 is a schematic diagram of the seventh embodiment of the present disclosure.
Fig. 8 is a schematic diagram of the eighth embodiment of the present disclosure.
Fig. 9 is a schematic diagram of the ninth embodiment of the present disclosure.
Fig. 10 is a schematic diagram of the tenth embodiment of the present disclosure.
Fig. 11 is a schematic diagram of an electronic device for implementing any of the methods of reading and writing of distributed block storage systems in the embodiments of the present disclosure.

### DETAILED DESCRIPTION

The exemplary embodiments of the present disclosure, including various details of the embodiments of the present disclosure to facilitate understanding, are described in combination with the accompanying drawings as follows, and should be regarded as merely exemplary. Therefore, those of ordinary skill in the art should appreciate that various changes and modifications can be made to the embodiments described herein without departing from the scope and spirit of the present disclosure. Likewise, for clarity and conciseness, description of well-known functions and structures is omitted in the following description.

In the related art, in a distributed block storage system, high-performance disks store hot data, and low-performance disks store cold data. There are certain problems by this way. For instance, when the client needs to read and write the cold data, it needs to conduct reading and writing operation on the low-performance disks. At the moment, the performance of reading and writing of the distributed block storage system is the performance of reading and writing of the low-performance disks, thus the performance of reading and writing for the cold data of the distributed block storage system is poor, as the performance of reading and writing of the low-performance disks is poor.

The present disclosure provides some embodiments as follows in order to improve the performance of reading and writing of the distributed block storage system.

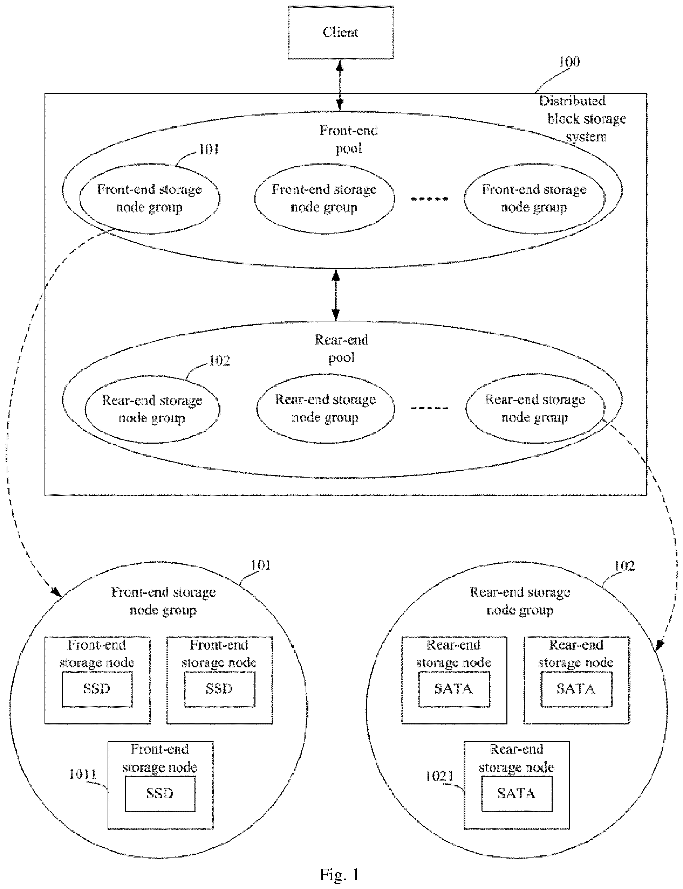

Fig. 1 is the schematic diagram of the first embodiment of the present disclosure. The present embodiment provides a distributed block storage system. As shown in Fig. 1, the system 100 includes: at least one front-end storage node group 101 and at least one rear-end storage node group 102. Each front-end storage node group 101 in the at least one front-end storage node group includes at least one front-end storage node 1011. Each rear-end storage node group 102 in the at least one rear-end storage node group includes at least one rear-end storage node 1021. Each front-end storage node 1011 in the at least one front-end storage node includes at least one front-end disk. Each rear-end storage node 1021 in the at least one rear-end storage node includes at least one rear-end disk. Performance of reading and writing of the front-end disk is higher than that of the rear-end disk. A set of the at least one front-end storage node group 101 can be referred to as a front-end pool, and a set of the at least one rear-end storage node group 102 can be referred to as a rear-end pool.

In embodiments of the present disclosure, the storage node groups (the front-end storage node group and the rear-end storage node group) are divided according to the corresponding same data. The situation that each storage node group only includes one storage node is not excluded, that is, each front-end storage node group may include one front-end storage node, and each rear-end storage node group may include one rear-end storage node. However, generally, for the purpose of data disaster recovery backup, there are several copies for a same piece of data. For instance, there are three copies for a same piece of data, wherein each copy is stored in one storage node. As the result, the three storage nodes where the three copies are stored can form one storage node group. A set of several copies (e.g., three copies) corresponding to a same piece of data can be referred to as one replicate group (RG).

As shown in Fig. 1, for example, each front-end storage node group 101 includes three front-end storage nodes 1011, and each rear-end storage node group 102 includes three rear-end storage nodes 1021; and for example, the front-end disk is a solid state disk or solid state drive (SSD), and the rear-end disk is a serial advanced technology attachment (SATA) disk.

The distributed block storage system includes a plurality of storage nodes, for instance, servers. The client can allocate one storage node in the distributed block storage system to a request of reading and writing according to a preset allocation strategy, and then send the request of reading and writing to the allocated storage node.

In the present embodiment, the client allocates the front-end storage nodes when allocating the storage nodes for the request of reading and writing, that is, the client selects one front-end storage node as the allocated storage node, and then sends the request of reading and writing to the selected front-end storage node. The client can conduct the above selection on the plurality of front-end storage nodes according to load balancing and other strategies.

Correspondingly, in the related art, the client allocates the storage nodes according to the heat of data. For instance, the client allocates hot data to the storage nodes including SSDs and allocates cold data to the storage nodes including SATAs. Therefore, in the related art, the storage nodes for receiving the request of reading and writing sent by the client may be the storage nodes including SSDs and may also be the storage nodes including SATAs, which is different from the present embodiment, in which all the front-end storage nodes are the storage nodes including SSDs.

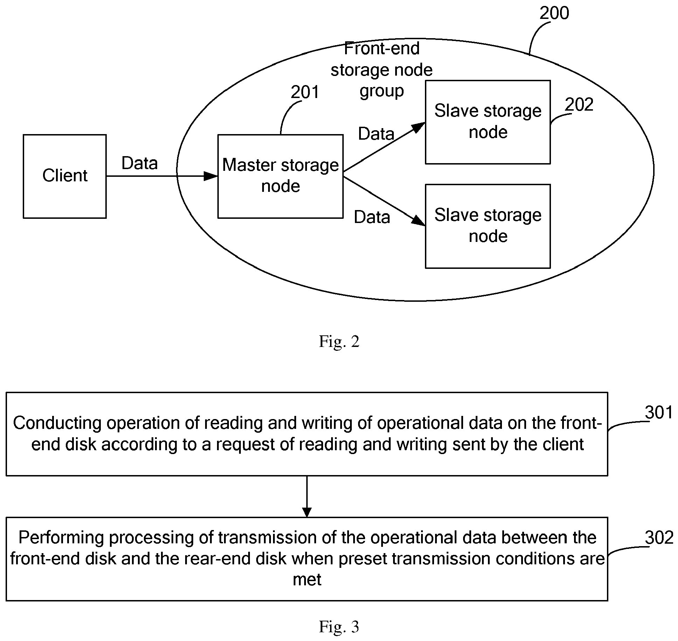

As shown in Fig. 1, for example, each front-end storage node group includes three front-end storage nodes. Further, referring to Fig. 2, three front-end storage nodes in the front-end storage node group 200 can be named as one master storage node 201 and two slave storage nodes 202, respectively. The master storage node is the storage node that intersects with the client, that is, the front-end storage node for receiving the request of reading and writing sent by the client is referred to as the master storage node. Fig. 2 further illustrates the direction of writing in the direction of data, that is, when the request of reading and writing is specifically a request of writing, the master storage node 201 synchronizes to-be-written data carried in the request of writing to the two slave storage nodes 202.

It can be understood that the three rear-end storage nodes that the rear-end storage node group includes may also be divided into one master storage node and two slave storage nodes, the master storage node in the rear-end storage nodes refers to the storage node for receiving the request of reading and writing of the front-end storage nodes, and the principle of other operation is substantially consistent with the principle of operation of the master storage node and the slave storage nodes in the front-end storage nodes.

In the present embodiment, the data disaster recovery backup can be realized through setting the master storage nodes and the slave storage nodes.

Fig. 3 is the schematic diagram of the third embodiment of the present disclosure. The present embodiment provides a method of reading and writing of a distributed block storage system, wherein the distributed block storage system includes a front-end storage node and a rear-end storage node, the front-end storage node includes at least one front-end disk, the rear-end storage node includes at least one rear-end disk, performance of reading and writing of the front-end disk is higher than that of the rear-end disk, and the method includes:
301. conducting the operation of reading and writing of operational data on the front-end disk according to a request of reading and writing sent by the client; and
302. performing the processing of transmission of the operational data between the front-end disk and the rear-end disk when preset transmission conditions are met.

Generally, for the purpose of cost reduction, the distributed block storage system can adopt a hierarchical storage mode, that is, the distributed block storage system includes a high-performance disk as one part, and a low-performance disk as the other part. In the related art, hot data is stored in the high-performance disk, cold data is stored in the low-performance disk, and performance is poor during operations for the cold data. In the present embodiment, operation is conducted on the front-end disk according to the request of reading and writing of the client, that is, in response to the request of reading and writing of the client, the front-end storage node conducts operation on the front-end disk according to the request of reading and writing without distinguishing the cold data and the hot data, while the front-end disk is high-performance disk. Thus, the performance of reading and writing is improved.

In the present embodiment, the operation of reading and writing is conducted on the front-end disk according to the request of reading and writing sent by the client, and the front-end disk is the disk with high performance of reading and writing, thereby improving the performance of reading and writing of the distributed block storage system.

In some embodiments, the transmission conditions include: a condition of migration and a condition of caching, and performing the processing of transmission of operational data between the front-end disk and the rear-end disk when the preset transmission conditions are met includes: migrating the operational data on the front-end disk onto the rear-end disk when the condition of migration is met; and/or, caching the operational data on the rear-end disk onto the front-end disk when the condition of caching is met.

Migration can be referred to as flush, which means that after data is migrated onto the rear-end disk, corresponding storage spaces of the front-end disk can be reclaimed for storing new data. Cache can also be referred to as prefetch, which means that data on the rear-end disk is kept unchanged, while the same data is backed up on the front-end disk.

In the present embodiment, the migrating the data on the front-end disk onto the rear-end disk when the condition of migration is met can reduce a data occupancy rate on the front-end disk. The performance of reading and writing of the front-end disk is higher than that of the rear-end disk, and cost of the front-end disk is also higher than that of the rear-end disk in general, and therefore, cost can be reduced by reducing the data occupancy rate on the front-end disk; and/or, the caching the data on the rear-end disk onto the front-end disk when the condition of caching is met can directly provide the data for the client from the front-end disk, thereby improving the performance of reading.

The method of reading and writing in the embodiments of the present disclosure can be specifically applied to the front-end storage nodes. Further, for the scenario that the front-end storage nodes include the master storage node and the slave storage nodes as shown in Fig. 2, the method of reading and writing can be specifically applied to the master storage node. That is, the master storage node receives the request of reading and writing sent by the client and conducts the operation of reading and writing on the SSD in the master storage node according to the request of reading and writing. In addition, corresponding to the request of writing in the request of reading and writing, the master storage node can also synchronize to-be-written data carried in the request of writing to the slave storage nodes, and store the to-be-written data onto the SSDs that the slave storage nodes include after the slave storage nodes receive the to-be-written data. A process of data writing of the slave storage nodes is substantially consistent with that of the master storage node the process of data writing. For the request of reading in the request of reading and writing, since the master storage node and the slave storage nodes are the nodes that store the same data, the master storage node can directly return to-be-read data or read failure information to the client without sending the request of reading to the slave storage nodes.

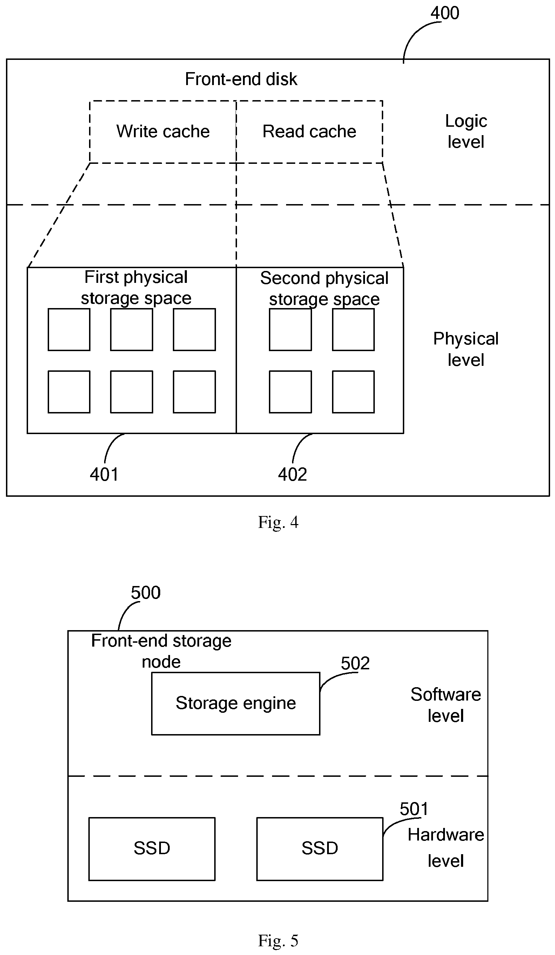

In some embodiments, as shown in Fig. 4, the front-end disk (e.g., SSD) can be divided into two logical regions on the logical level, for example, which are referred to as the write cache and the read cache, respectively. Correspondingly, the front-end disk 400 can include a first physical storage space 401 and a second physical storage space 402 on the physical level, the first physical storage space 401 includes at least one physical block, the second physical storage space 402 includes at least one physical block, the first physical storage space 401 corresponds to the write cache, and the second physical storage space 402 corresponds to the read cache.

It can be understood that in Fig. 4 is an example that intersections do not exist between the first physical storage space 401 and the second physical storage space 402. However, in some embodiments, intersections may exist between the two physical storage spaces, for instance, the first physical storage space includes: the physical block A, the physical block B and the physical block C, and the second physical storage space may include: the physical block C and the physical block D.

Generally, the amount of the request of writing may be larger than that of the request of reading. Consequently, in some embodiments, the sum of the volume of the first physical storage space is larger than the sum of the volume of the second physical storage space to meet the actual demand better.

In some embodiments, the migrating the operational data on the front-end disk onto the rear-end disk includes: migrating the operational data in the first physical storage space of the front-end disk onto the rear-end disk; and/or, the caching the operational data on the rear-end disk onto the front-end disk includes: caching the operational data on the rear-end disk into the second physical storage space of the front-end disk

Migrating data from the SSD to SATA can be referred to as the backup application, while caching the data from the SATA to the SSD can be referred to as the caching application. Data corresponding to migrating and data corresponding to caching in the present embodiment are stored in the first physical storage space and the second physical storage space, respectively, the two physical storage spaces are different, thus the backup application and the caching application can be compatible. Correspondingly, in the related art, by migrating cold data from the SATA to the SSD, or migrating hot data from the SSD to the SATA, only one of the backup application and the caching application can be realized, and the backup application and the caching application are incompatible.

In the present embodiment, the backup application and the caching application can be compatible by dividing the SSD into the first physical storage space and the second physical storage space, which correspond to the migrated data and the cached data, respectively.

The front-end storage nodes can conduct data management by virtue of pre-installed management tools, for instance storage engines (e.g., rocksdb). For instance, referring to Fig. 5, the front-end storage node 500 can include SSDs 501 at hardware level and a storage engine 502 at software level.

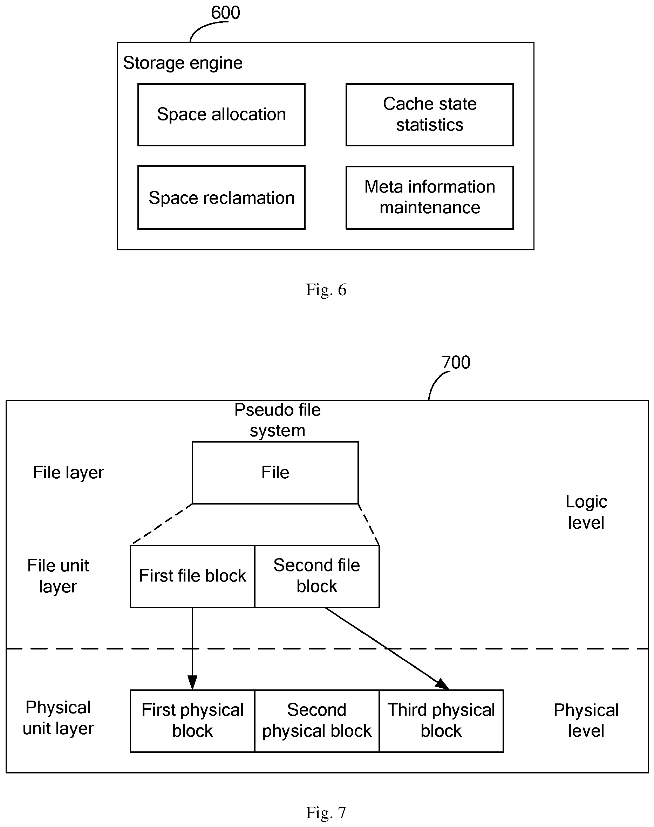

Referring to Fig. 6, data management that the storage engine conducts can include: space allocation, space reclamation, cache state statistics, meta information maintenance, etc.

Space allocation: allocating physical storage spaces to data. For instance, the SSD includes a plurality of physical blocks, and the storage engine can allocate the physical blocks for the usage of data on the basis of a preset allocation strategy. According to allocation situations of the physical blocks, the states of the physical blocks can be divided into: "unallocated", "pre-allocated" and "mapped". Further, when the SSD is divided into a read cache and a write cache on the logical level, the "unallocated" and the "pre-allocated" can be further divided into: "unallocated for the read cache", "unallocated for the write cache", "pre-allocated for the read cache" and "pre-allocated for the write cache", and the "mapped" can be further divided into: "mapped to the read cache", "mapped to the write cache" and "mapped to the read and write cache". The "unallocated" means that the allocation is not conducted. The "pre-allocated" means that the physical block can be pre-allocated for the next piece of data of the current piece of data when the physical block is allocated for the current piece of data. For instance, while the physical block A is allocated to the current piece of data, the physical block B can be pre-allocated to the next piece of data at the same time. The "mapped" means that not only is the physical block allocated, but also a mapping relation is further established between the read cache and/or the write cache and the physical block. For instance, referring to Fig. 4, the SSD can be divided into the read cache and the write cache on the logical level, and different physical blocks can be related to different caches. For instance, the physical blocks corresponding to the write cache include: the physical block A, the physical block B and the physical block C, and the physical blocks corresponding to the read cache may include: the physical block C and the physical block D, then the states of the physical block A and the physical block B are "mapped" and "mapped to the write cache", the state of the physical block C is "mapped" and "mapped to the read and write cache"; and the state of the physical block D is "mapped" and "mapped to the read cache". The above space allocation situations, for instance, the states of various physical blocks, can persist in the storage engine, thereby being able to restore after corresponding processes of the storage engine are restarted.

Space reclamation: reclaiming physical spaces that data has already used, which mainly refers to reclaiming the space of the SSD to reduce an occupancy rate of the SSD and reduce cost. For instance, the space that can be reclaimed includes: physical blocks corresponding to "pre-allocated for the write cache"; physical blocks corresponding to "pre-allocated for the read cache"; physical blocks that are originally used by the data in the physical blocks corresponding to the write cache which is flushed to SATAs; and physical blocks corresponding to prefetched data when the data hotter than the prefetched data in physical blocks corresponding to the read cache exists.

Cache state statistics: conducting statistics on the state of the read cache and the state of the write cache separately. For the read cache, for instance statistics is conducted on the amount of access to data stored in the read cache within the unit of time or the specific duration to determine the heat of the stored data; and for the write cache, for instance statistics is conducted on the data size of the write request within the unit of time or the specific duration to realize the statistics of the heat of the operation of writing.

Meta information maintenance: meta information refers to basic data information adopted during data management, for instance, the mapping relation established after the above space allocation, the storage information after the data is written into the physical blocks, and the mapping relation between front-end storage nodes and rear-end storage nodes, etc. The meta information can be stored in the storage engine, and each replicate group corresponds to the same storage engine instance.

On the basis of the storage engine, the front-end storage node can perform the following operation of reading and writing:
In some embodiments, the conducting the operation of reading and writing of the operational data on the front-end disk according to the request of reading and writing sent by the client includes: when the request of reading and writing is the request of writing, setting the to-be-written data as a file, and dividing the file into at least one file unit, wherein the to-be-written data is the operational data, and the request of writing carries the to-be-written data, and determining the physical unit that each file unit of the at least one file unit is mapped to, wherein the physical unit is located on the front-end disk, and storing each file unit on the mapped physical unit of the front-end disk; and/or, when the request of reading and writing is the request of reading, acquiring storage information of the to-be-read data on the front-end disk according to an identifier, acquiring the to-be-read data on the front-end disk according to the storage information, and sending the to-be-read data to the client, wherein the to-be-read data is the operational data, and the request of reading carries the identifier of the to-be-read data.

For the request of writing:
the first physical storage space 401 is used to store to-be-written data carried in the request of writing received by the front-end storage node. For instance, for the master storage node, the master storage node stores the to-be-written data carried in the request of writing sent by the client in the physical blocks corresponding to the write cache of the SSD of the master storage node; and for the slave storage node, the slave storage node receives the request of writing, including the to-be-written data, that the master storage node synchronizes, and then the slave storage node stores the to-be-written data, in the physical blocks corresponding to the write caches of the SSDs of the slave storage nodes.

The storage engine can conduct data management in accordance with the form of a pseudo file system. Referring to Fig. 7, the pseudo file system 700 can be divided into a file layer, a file unit (inode) layer and a physical (disk) unit layer. The file layer and the file unit layer are located at a logic level, while the physical unit layer is located at the physical level. Fig. 7 only illustrates related content of one file, and it can be understood that the pseudo file system may also include a plurality of files. In addition, during data storage, data is processed as a file, data in the SSD is flushed into the SATA under certain conditions, and thus various data in the SSD can be referred to as "sparse", and accordingly, the pseudo file system can be referred to as a sparse pseudo file system.

In combination with Fig. 7, the front-end storage nodes (including a master storage node and slave storage nodes) can regard the data as the file after receiving the data (i.e., the aforementioned to-be-written data), then divide the file into at least one file unit, and subsequently map various file units to corresponding physical units. It can be understood that granularities of the file unit and the physical unit can be set according to different demands, for instance, the file unit can be a file block or a file slice, while the physical unit can be a physical block or a physical segment, wherein the granularity of the file slice is less than that of the file block, the granularity of the physical segment is less than that of the physical block, the file block corresponds to the physical block, and the file slice corresponds to the physical segment. In the present embodiment, referring to Fig. 7, for example, the file unit is the file block, and the physical unit is the physical block.

When the file is divided into the file blocks, the front-end storage node can perform the division according to an allocation strategy pre-stored in the storage engine. For instance, referring to Fig. 7, corresponding to a piece of to-be-written data, the to-be-written data is divided into a first file block and a second file block after being regarded as the file. A mapping relation between the file blocks and the physical blocks can be established and updated according to a process of writing. For instance, corresponding to a file block without a mapping relation established, the front-end storage node determines unoccupied physical blocks through the meta information recorded in the storage engine, selects one physical block from the unoccupied physical blocks according to the preset allocation strategy, and then can establish a mapping relation between the file block and the physical block; or, for a file block with an established mapping relation, can determine a physical block corresponding to the file block according to the existing mapping relation, wherein the mapping relation can also be stored in the storage engine. For instance, referring to Fig. 7, the first file block corresponds to the first physical block, the second file block corresponds to the third physical block, then the first file block is stored in the first physical block, and the second file block is stored in the third physical block.

Certainly, it can be understood that if the SSD is divided into physical blocks corresponding to the write cache and physical blocks corresponding to the read cache, the first physical block, the second physical block and the third physical block corresponding to the request of writing described above are the physical blocks corresponding to the write cache, that is, the physical blocks in the first physical storage space.

For the request of reading:
the second physical storage space 402 is used to store data cached from the SATA, and the data can be referred to as prefetched data, so that when the prefetched data includes data corresponding to an identifier of the to-be-read data carried in the request of reading sent by the client, the front-end storage node sends the corresponding data to the client.

During data reading, the front-end storage node can also perform a process of reading of data on the basis of the storage engine. For instance, the storage engine records stored meta information (for instance identifiers of data and corresponding storage information) of the prefetched data. If the identifier of the to-be-read data carried in the received request of reading is included in the stored identifiers of data, the corresponding data can be read from the physical blocks corresponding to the read cache according to the corresponding storage information and sent to the client. The prefetched data is cached from the rear-end storage node onto the front-end storage node in advance, and the process of prefetch can be seen in the following descriptions.

The respective processing processes of the front-end storage node for the request of writing and the request of reading sent by the client are described above, and the data can be written into the SSD and/or the data can be read from the SSD to the client through the aforementioned processes.

Further, it can be seen from the aforementioned processes that the performance of writing of the SSD can be provided for the writing of data, if the to-be-read data is stored in the SSD, the data is directly read from the SSD and returned to the client, the performance of reading of the SSD is provided, and thus the performance of reading and writing of the distributed block storage system can be improved.

The front-end storage node is not limited to interacting with the client, that is, the front-end storage node is used to: conduct the operation of reading and writing on the front-end disk according to the request of reading and writing sent by the client. On the other hand, the front-end storage node interacts with the rear-end storage node under certain conditions. That is, the front-end storage node is further used to: perform the processing of transmission of data between the front-end disk and the rear-end disk when preset transmission conditions are met.

As described above, in some embodiments, the transmission conditions include: a condition of migration and a condition of caching, and the performing the processing of transmission of data between the front-end disk and the rear-end disk when the preset transmission conditions are met includes: migrating the data on the front-end disk onto the rear-end disk when the condition of migration is met; and/or, caching the data on the rear-end disk onto the front-end disk when the condition of caching is met.

For simplicity of description, the process of migrating the data on the front-end disk onto the rear-end disk when the condition of migration is met can be referred to as flush. The process of caching the data on the rear-end disk onto the front-end disk when the condition of caching is met can be referred to as prefetch.

### For flush:

Flush refers to migrating the data in the SSD into the SATA. The storage engine of the front-end storage node can store a mapping relation between the front-end storage node and the rear-end storage node. The mapping relation can be a fixed mapping relation determined or set according to the allocation strategy. Therefore, according to the mapping relation, it can be determined which rear-end storage node group the data in the SSD is flushed into, then the front-end storage node including the SSD transmits the flushed data to the master storage nodes in the corresponding rear-end storage node group, and then the master storage node synchronizes the data to the corresponding slave storage nodes. For instance, the data on the SSD in the front-end storage node A needs to be flushed and there is a mapping relation between the front-end storage node A and the rear-end storage node B, then the front-end storage node A transmits the data to the rear-end storage node B, and after the rear-end storage node B receives the data, the data can be written into the SATA with reference to the processing method of the front-end storage node.

In the present embodiment, flush conditions can include at least one of the following conditions:
(1) a time point of periodic flush: correspondingly, flush is performed when the point of periodic flush is reached;
(2) a ratio of dirty data to the total volume of an SSD: the dirty data refers to the data written into the SSD, that is, the data stored in physical blocks corresponding to a write cache of the SSD, and correspondingly, when the ratio of the written data to the total volume of the SSD is larger than or equal to a preset ratio, flush is performed, wherein the case when the data in the physical blocks corresponding to the write cache is full is an extreme case of this condition;
(3) a size of space occupied by the dirty data: correspondingly, when the total size of the written data is larger than or equal to a preset data size, flush is performed;
(4) a duration of caching the dirty data: correspondingly, when the duration of writing the written data is larger than or equal to a preset duration, flush is performed; and
(5) a ratio of the dirty data to the prefetched data: the prefetched data refers to the data stored in physical blocks corresponding to a read cache, and correspondingly, when the ratio is larger than a preset value, flush is performed.

It can be understood that the flushed data refers to the data in the physical blocks corresponding to the write cache.

When any of the aforementioned flush conditions is met, flush operation is performed.

If the (1) the time point of the periodic flush is reached, a preset size of data can be flushed; and
if the conditions (2)-(4) are met, flush is performed till the flush conditions are not met any more. For instance, for the ratio of the dirty data to the total volume of the SSD, flush is performed till the ratio is less than the preset ratio.

In some embodiments, migrating the operational data on the front-end disk onto the rear-end disk includes: when the operational data occupies a plurality of physical blocks on the front-end disk, migrating the operational data on various physical blocks onto the rear-end disk in sequence according to a priority order of various physical blocks of the plurality of physical blocks.

For instance, the operational data occupies the plurality of physical blocks, then flush can be performed according to the priority of the physical blocks till the flush conditions are not met any more. For instance, the priority of the physical block A is higher than that of the physical block B, then data in the physical block A is flushed first. For instance, if the above ratio is less than the preset ratio after the data in the physical block A is flushed, then flush is stopped, otherwise, data in the physical block B continues being flushed.

In the present embodiment, the priority of various physical blocks can be in the following order:
the block being snapshot > the block having a large amount of data in the write cache > the block having a small amount of data in the write cache.

In the present embodiment, the effect of flush can be improved by flushing data in accordance with the priority of the physical blocks.

In the above embodiment, flush is conducted for the plurality of physical blocks according to the priority. In some embodiments, sequential flush is performed for a single physical block. That is, sequential flush is conducted on data of a single block according to offset and length as far as possible, iometer (io) operation is reduced, and the data is sequentially written into the rear-end SATA. That is, in some embodiments, the migrating the operational data on various physical blocks onto the rear-end disk in sequence includes: corresponding to each single physical block of the various physical blocks, migrating the operational data on the single physical block onto the rear-end disk in sequence according to a storage sequence of the operational data stored on the single physical block.

In the present embodiment, flush is conducted in sequence corresponding to a single physical block, iometer operation can be reduced, and the pressure on the rear-end storage node is reduced.

In addition, during flush, the following processing can also be conducted: for instance, controlling the total amount of concurrent flush of a same replicate group to be not larger than a set total amount; setting a flush speed to be not larger than a set speed; and stopping flush when the disk pressure (represented with ioutil for instance) on a local SSD and/or to-be-flushed SATA is larger than a set value, etc.

In the present embodiment, by the flush conditions described above, the occupancy rate of the front-end storage node can be reduced, it is realized that a pseudo file system that the storage engine depends on is a sparse pseudo file system, and thus the cost of the distributed block storage system is reduced.

For prefetch:
prefetch refers to caching data in the SATA into the SSD, for instance, storing the data into the physical blocks corresponding to the read cache of the SSD.

For instance, prefetch conditions include: within the unit of time or the set duration, if the number of requests of reading for a same piece of data is larger than a set value, then prefetch is performed. For instance, initially, the physical blocks corresponding to the read cache of the SSD are empty. If the front-end storage node where the SSD is located receives the request of reading for first data sent by the client at a certain moment, since the physical blocks corresponding to the current read cache are empty, the front-end storage node feeds back read failure information to the client; and if the front-end storage node receives the request of reading for the first data again after a quite short time (the time can be set), the front-end storage node reads the first data from the rear-end storage node and stores the first data onto the physical blocks corresponding to the read cache of the SSD. The storage engine of the front-end storage node can record meta information of the data and can learn the above rear-end storage node in accordance with the meta information, and thus a request of prefetch including an identifier of to-be-prefetched data can be sent to the corresponding rear-end storage node. The rear-end storage node acquires corresponding data from its SATA and returns the corresponding data to the front-end storage node after receiving the request of prefetch sent by the front-end storage node. The front-end storage node, on the one hand, conducts the read cache, and on the other hand, returns the data to the client.

In the present embodiment, by conducting prefetch only when the prefetch conditions are met, the problem of read and write pressure caused by conducting prefetch on the rear-end each time can be avoided, and the reduced performance of reading and writing is avoided.

In addition, the data stored in the physical blocks corresponding to the read cache can be eliminated according to conditions, and thus the physical blocks corresponding to the eliminated data can be recycled for subsequent prefetch of data. In the present embodiment, elimination can be conducted in accordance with the least recently used (LRU). For instance, an time point of elimination can be set. After the time point is reached, statistics can be conducted on a frequency of access to data in each physical block corresponding to the read cache within a preset duration before this time point, and the data with the lowest frequency of access is eliminated preferentially. In addition, elimination can also be triggered in case of insufficient space of the SSD, except for triggering elimination in accordance with the above time point. For instance, if the sum of the amount of the data stored in the physical blocks corresponding to the write cache and the amount of the data stored in the physical blocks corresponding to the read cache is larger than a set value, or the ratio of the sum to the total volume of the SSD is larger than a set value, the elimination of the data in the physical blocks corresponding to the read cache can be triggered, the elimination can also be performed according to the frequency of access within a set duration before the trigger point, and the data with the lower frequency of access is eliminated preferentially.

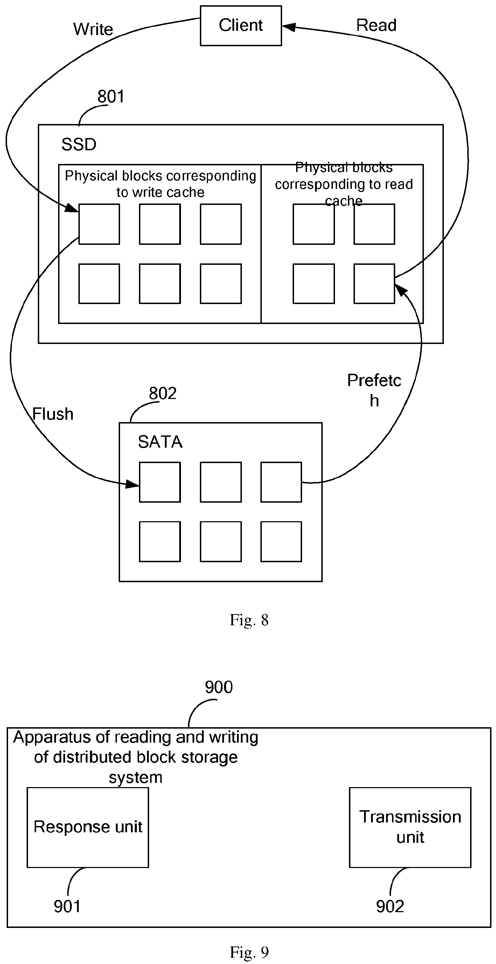

In combination with the related content of the above embodiments, referring to Fig. 8, for a request of writing sent by the client, the front-end storage node can write data carried in the request of writing onto the physical blocks corresponding to the write cache of the SSD 801 in the front-end storage node, and flush the data on the physical blocks corresponding to the write cache into the SATA 802 when the flush conditions are met. In addition, the front-end storage node reads the data from the SATA of the rear-end storage node and stores the data onto the physical blocks corresponding to the read cache of the SSD when the preset prefetch conditions are met, so that the data can be returned to the client when the client reads the data. It can be understood that although the writing and flush point to the same physical block in the SSD in Fig. 8, the method is not limited, that is, data may be written into the physical block A, while the physical block pointed by the flush may be the physical block B.

In the present embodiment, the operation of reading and writing is conducted on the front-end disk according to the request of reading and writing sent by the client, and the front-end disk is the disk with high performance of reading and writing,
thereby improving the performance of reading and writing of the distributed block storage system. Migrating the data on the front-end disk onto the rear-end disk when the condition of migration is met can reduce the data occupancy rate on the front-end disk. The performance of reading and writing of the front-end disk is higher than that of the rear-end disk, and the cost of the front-end disk is also higher than that of the rear-end disk in general, thus cost can be reduced by reducing the data occupancy rate on the front-end disk; and/or, caching the data on the rear-end disk onto the front-end disk when the condition of caching is met can directly provide the data for the client from the front-end disk, thereby improving the performance of reading. The backup application and the caching application can be compatible by dividing the SSD into the first physical storage space and the second physical storage space, which correspond to the migrated data and the cached data, respectively.

The distributed block storage system and the method of reading and writing thereof are described above. The embodiments of the present disclosure can further provide a corresponding apparatus of reading and writing and a front-end storage node.

Fig. 9 is a schematic diagram of the ninth embodiment of the present disclosure. The present embodiment provides an apparatus of reading and writing of the distributed block storage system, wherein the distributed block storage system includes a front-end storage node and a rear-end storage node, the front-end storage node includes at least one front-end disk, the rear-end storage node includes at least one rear-end disk, the performance of reading and writing of the front-end disk is higher than that of the rear-end disk. As shown in Fig. 9, the apparatus 900 includes: a response unit 901 and a transmission unit 902. The response unit 901 is used to conduct the operation of reading and writing of operational data on the front-end disk according to a request of reading and writing sent by the client; and the transmission unit 902 is used to perform the processing of transmission of the operational data between the front-end disk and the rear-end disk when preset transmission conditions are met.

In some embodiments, the transmission conditions include: a condition of migration and a condition of caching, the transmission unit 902 includes: a migration module, and/or a caching module, the migration module is used to migrate the operational data on the front-end disk onto the rear-end disk when the condition of migration is met, and the caching module is used to cache the operational data on the rear-end disk onto the front-end disk when the condition of caching is met.

In some embodiments, the migration module is specifically used to: when the operational data occupies a plurality of physical blocks on the front-end disk, migrate the operational data on various physical blocks onto the rear-end disk in sequence according to the priorities of various physical blocks of the plurality of physical blocks.

In some embodiments, the migration module is further specifically used to: corresponding to each single physical block of the various physical blocks, migrate the operational data on the single physical block onto the rear-end disk in sequence according to a storage sequence of the operational data stored on the single physical block.

In some embodiments, the front-end disk includes a first physical storage space and a second physical storage space; the migration module is specifically used to: migrate the operational data in the first physical storage space of the front-end disk onto the rear-end disk; and/or, the caching module is specifically used to: cache the operational data on the rear-end disk in the second physical storage space of the front-end disk.

In some embodiments, the response unit 901 is specifically used to: when the request of reading and writing is the request of writing, set the to-be-written data as a file, and divide the file into at least one file unit, wherein the to-be-written data is the operational data, and the request of writing carries the to-be-written data, and determine the physical unit that each file unit of the at least one file unit is mapped to, wherein the physical unit is located on the front-end disk, and store each file unit on the mapped physical unit of the front-end disk; and/or, when the request of reading and writing is the request of reading, acquire storage information of the to-be-read data on the front-end disk according to an identifier, acquire the to-be-read data on the front-end disk according to the storage information, and send the to-be-read data to the client, wherein the to-be-read data is the operational data, and the request of reading carries the identifier of the to-be-read data.

In the present embodiment, the operation of reading and writing is conducted on the front-end disk according to the request of reading and writing sent by the client, and the front-end disk is the disk with high performance of reading and writing, thereby improving the performance of reading and writing of the distributed block storage system. Migrating the data on the front-end disk onto the rear-end disk when the condition of migration is met can reduce the data occupancy rate on the front-end disk. The performance of reading and writing of the front-end disk is higher than that of the rear-end disk, and cost of the front-end disk is also higher than that of the rear-end disk in general, thus cost can be reduced by reducing the data occupancy rate on the front-end disk; and/or, caching the data on the rear-end disk onto the front-end disk when the condition of caching is met can directly provide the data for the client from the front-end disk, thereby improving the performance of reading. The backup application and the caching application can be compatible by dividing the SSD into the first physical storage space and the second physical storage space, which correspond to the migrated data and the cached data, respectively.

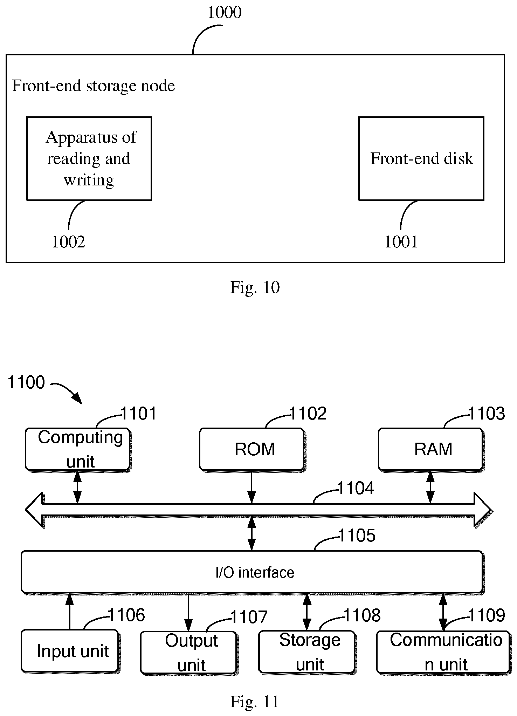

Fig. 10 is a schematic diagram of the tenth embodiment of the present disclosure. The present embodiment provides a front-end storage node. The front-end storage node 1000 includes: at least one front-end disk 1001 and an apparatus of reading and writing 1002. The apparatus of reading and writing 1002 is used to conduct the operation of reading and writing on the front-end disk 1001. The apparatus of reading and writing 1002 can be as shown in Fig. 9.

In addition, the present disclosure further provides a distributed block storage system. The distributed block storage system includes the front-end storage node as shown in Fig. 10.

In some embodiments, the front-end storage node is located in a front-end storage node group, the system includes at least one front-end storage node group, and each front-end storage node group in the at least one front-end storage node group includes at least one front-end storage node; and the system further includes: at least one rear-end storage node group, and each rear-end storage node group in the at least one rear-end storage node group includes at least one rear-end storage node.

In some embodiments, each front-end storage node group includes a plurality of front-end storage nodes; the plurality of front-end storage nodes include: a master storage node and at least one slave storage node; when the front-end storage node is the master storage node, the master storage node is further used to: receive a request of reading and writing sent by the client; and, when the request of reading and writing is a request of writing, synchronize to-be-written data carried in the request of writing to the slave storage node.

In some embodiments, the front-end disk is an SSD; and/or, the rear-end disk is an SATA.

In the present embodiment, the operation of reading and writing is conducted on the front-end disk according to the request of reading and writing sent by the client, and the front-end disk is the disk with high performance of reading and writing, thereby improving the performance of reading and writing of the distributed block storage system. Migrating the data on the front-end disk onto the rear-end disk when the condition of migration is met can reduce the data occupancy rate on the front-end disk. The performance of reading and writing of the front-end disk is higher than that of the rear-end disk, and cost of the front-end disk is also higher than that of the rear-end disk in general, thus cost can be reduced by reducing the data occupancy rate on the front-end disk; and/or, caching the data on the rear-end disk onto the front-end disk when the condition of caching is met can directly provide the data for the client from the front-end disk, thereby improving the performance of reading. The backup application and the caching application can be compatible by dividing the SSD into the first physical storage space and the second physical storage space, which correspond to the migrated data and the cached data, respectively.

It can be understood that the same or corresponding contents in different embodiments of the present disclosure may be referred to each other, and the content not described in detail in the embodiments may refer to the related contents of other embodiments.

According to the embodiments of the present disclosure, the present disclosure further provides an electronic device, a readable storage medium and a computer program product.

Fig. 11 illustrates a schematic block diagram of an exemplary electronic device 1100 that can be used to implement the embodiments of the present disclosure. The electronic device aims to represent various forms of digital computers, such as the laptop, the desktop, the workbench, the server, the blade server, the mainframes computer and the other suitable computer. The electronic device may further represent various forms of mobile apparatuses, such as the personal digital assistant, the cellular phone, the smart phone, the wearable device and other similar computing apparatuses. Components, connections and relations thereof, and functions thereof shown herein are regarded as merely exemplary, and are not intended to limit the implementation of the present disclosure described and/or required herein.

As shown in Fig. 11, the electronic device 1100 includes a computing unit 1101 that can perform various suitable actions and processing according to a computer program stored in a read-only memory (ROM) 1102 or a computer program loaded from a storage unit 1008 into a random access memory (RAM) 1103. The RAM 1103 can further store various programs and data required for operation of the device 1100. The computing unit 1101, the ROM 1102 and the RAM 1103 are connected to one another through a bus 1104. An input/output (I/O) interface 1105 is also connected to the bus 1104.

A plurality of components in the electronic device 1100 are connected to the I/O interface 1105, including: an input unit 1106, e.g., a keyboard and a mouse; an output unit 1107, e.g., various types of displays and loudspeakers; a storage unit 1108, e.g., a disk or an optical disk; and a communication unit 1109, e.g., a network card, a modem and a wireless transceiver. The communication unit 1109 allows the electronic device 1100 to exchange information/data with other devices through a computer network such as the Internet and/or various telecommunication networks.

The computing unit 1101 may be various universal and/or application-specific processing components with the capacities of processing and computing. Some examples of the computing unit 1101 include, but not limited to a central processing unit (CPU), a graphics processing unit (GPU), various application-specific artificial intelligence (AI) computing chips, various computing units for operating a machine learning model algorithm, a digital signal processor (DSP), and any suitable processor, controller, micro-controller, etc. The computing unit 1101 performs various methods and processing described above, e.g., the method of reading and writing of the distributed block storage system. For instance, in some embodiments, the method of reading and writing of the distributed block storage system can be implemented as a computer software program that is tangibly contained in a machine readable medium, e.g., the storage unit 1108. In some embodiments, a part or the whole of the computer program can be loaded and/or installed on the device 1100 via the ROM 1102 and/or the communication unit 1109. When the computer program is loaded to the RAM 1103 and performed by the computing unit 1101, one or more steps of the method of reading and writing of the distributed block storage system described above can be performed. Alternatively, in other embodiments, the computing unit 1101 can be configured to perform the method of reading and writing of the distributed block storage system through any other suitable means (e.g., by virtue of firmware).

Various implementations of systems and technologies described above herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. These various implementations can include: implementation in one or more computer programs; the one or more computer programs can be performed and/or interpreted on a programmable system including at least one programmable processor; the programmable processor may be the application-specific or universal programmable processor, and can receive data and instructions from a storage system, at least one input device and at least one output device, and transmit the data and the instructions to the storage system, the at least one input device and the at least one output device.

Program code for implementing the method of the present disclosure can be written by adopting any combination of one or more programming languages. The program code can be provided for the processor or the controller of the universal computer, application-specific computer or other programmable data processing apparatuses, so that functions/operations specified in flow diagrams and/or block diagrams are implemented when the program code is performed by the processor or the controller. The program code can be performed on the machine completely or partly, can be performed on the machine partly as the stand-alone software package, and can be performed on the remote machine partly or performed on the remote machine or the server completely.

In the context of the present disclosure, the machine readable medium may be a tangible medium that can contain or store the program for use by or in combination with an instruction executing system, an apparatus or a device. The machine readable medium may be a machine readable signal medium or a machine readable storage medium. The machine readable medium may include, but not limited to electronic, magnetic, optical, electromagnetic, infrared or semiconductor systems, apparatuses or devices, or any suitable combination thereof. The more specific example of the machine readable storage medium can include electrical connection based on one or more wires, the portable computer disk, the hard disk, the random access memory (RAM), a read-only memory (ROM), an erasable programmable read-only memory (EPROM or flash memory), an optical fiber, a portable compact disk read-only memory (CD-ROM), an optical storage apparatus, a magnetic storage apparatus, or any suitable combination thereof.

In order to provide interactions with a user, the system and technology described herein can be implemented on a computer, and the computer has: a display unit (e.g., cathode ray tube (CRT) or liquid crystal display (LCD) monitor), used to display information to the user; and a keyboard and a pointing apparatus (e.g., a mouse or trackball) by which the user can provide input for the computer. Other types of apparatuses can also be used to provide interactions with the user; for example, feedback provided for the user may be any form of sensor feedbacks (e.g., visual feedback, auditory feedback, or tactile feedback); and any form (including vocal input, voice input, or tactile input) can be used to receive the input from the user.

The system and technology described herein can be implemented in a computing system (e.g., as a data server) including a background component, or a computing system (e.g., an application server) including a middleware component, or a computing system (e.g., a user computer with a graphic user interface or a network browser through which the user can interact with the implementations of the system and technology described herein) including a front-end component, or a computing system including any combination of the background component, the middleware component and the front-end component. Components of the systems can be connected to one another through any form or medium of digital data communication (e.g., a communication network). Examples of the communication network include: the local area network (LAN), the wide area network (WAN) and the Internet.

The computer system may include a client and a server. Generally, the client and the server are away from each other and usually interact with each other through the communication network. A relation of the client and the server is generated through computer programs that run on corresponding computers and have a client-server relation with each other. The server may be a cloud server, which is referred to as a cloud computing server or a cloud host, and is a host product in a cloud computing service system to solve the defects of high management difficulty and weak expansibility of service in a traditional physical host and virtual private server (VPS) service. The server may also be a server of a distributed system, or a server in combination with a blockchain.

It should be understood that various forms of processes described above can be used to rearrange, add or delete steps. For instance, various steps recorded in the present disclosure can be performed in parallel, can be performed in sequence, and can also be performed in a different order as long as expected results of the technical solution disclosed by the present disclosure can be realized, which is not limited herein.

The aforementioned specific implementations do not limit the protection scope of the present disclosure. It should be clear for those skilled in the art that various modifications, combinations, subordinate combinations and replacements can be made according to design requirements and other factors. Any modifications, equivalent replacements and improvements made within the spirit and principle of the present disclosure should be included in the protection scope of the present disclosure.

## Claims

1. A computer-implemented method of reading and writing of a distributed block storage system, wherein the distributed block storage system comprises a front-end storage node and a rear-end storage node, the front-end storage node comprises at least one front-end disk, the rear-end storage node comprises at least one rear-end disk, performance of reading and writing of the front-end disk is higher than performance of reading and writing of the rear-end disk, and the method comprises:
conducting (301) operation of reading and writing of operational data on the front-end disk according to a request of reading and writing sent by a client; and
performing (302) processing of transmission of the operational data between the front-end disk and the rear-end disk when preset transmission conditions are met.

2. The method according to claim 1, wherein the transmission conditions comprise: a condition of migration and a condition of caching, and the performing the processing of transmission of the operational data between the front-end disk and the rear-end disk when the preset transmission conditions are met comprises:
migrating the operational data on the front-end disk onto the rear-end disk when the condition of migration is met; and/or
caching the operational data on the rear-end disk onto the front-end disk when the condition of caching is met.

3. The method according to claim 2, wherein the migrating the operational data on the front-end disk onto the rear-end disk comprises:
migrating the operational data on the various physical blocks onto the rear-end disk in sequence according to a priority order of various physical blocks of the plurality of physical blocks, when the operational data occupies a plurality of physical blocks on the front-end disk.

4. The method according to claim 3, wherein the migrating the operational data on the various physical blocks onto the rear-end disk in sequence comprises:
for each single physical block of the various physical blocks, migrating the operational data on the single physical block onto the rear-end disk in sequence according to a storage sequence of the operational data stored on the single physical block.

5. The method according to claim 2, wherein
the front-end disk comprises a first physical storage space and a second physical storage space;
the migrating the operational data on the front-end disk onto the rear-end disk comprises: migrating the operational data in the first physical storage space of the front-end disk onto the rear-end disk; and/or
the caching the operational data on the rear-end disk onto the front-end disk comprises: caching the operational data on the rear-end disk into the second physical storage space of the front-end disk.

6. The method according to any of claims 1-5, wherein the conducting the operation of reading and writing of the operational data on the front-end disk according to the request of reading and writing sent by the client comprises:
when the request of reading and writing is a request of writing, setting to-be-written data as a file, and dividing the file into at least one file unit, wherein the to-be-written data is the operational data, and the request of writing carries the to-be-written data, and determining a physical unit that each file unit of the at least one file unit is mapped to, wherein the physical unit is located on the front-end disk, and storing the each file unit on the mapped physical unit of the front-end disk; and/or
when the request of reading and writing is a request of reading, acquiring storage information of to-be-read data on the front-end disk according to an identifier, acquiring the to-be-read data on the front-end disk according to the storage information, and sending the to-be-read data to the client, wherein the to-be-read data is the operational data, and the request of reading carries the identifier of the to-be-read data.

7. An apparatus of reading and writing of a distributed block storage system, wherein the distributed block storage system comprises a front-end storage node and a rear-end storage node, the front-end storage node comprises at least one front-end disk, the rear-end storage node comprises at least one rear-end disk, performance of reading and writing of the front-end disk is higher than performance of reading and writing of the rear-end disk, and the apparatus comprises:
a response unit (901) configured to conduct operation of reading and writing of operational data on the front-end disk according to a request of reading and writing sent by a client; and
a transmission unit (902) configured to perform processing of transmission of the operational data between the front-end disk and the rear-end disk when preset transmission conditions are met.

8. The apparatus according to claim 7, wherein the transmission conditions comprise: a condition of migration and a condition of caching, and the transmission unit comprises:
a migration module configured to migrate the operational data on the front-end disk onto the rear-end disk when the condition of migration is met; and/or
a caching module configured to cache the operational data on the rear-end disk onto the front-end disk when the condition of caching is met.

9. A front-end storage node, comprising:
at least one front-end disk (1001); and
the apparatus (1002) of any of claims 7-8 to conduct operation of reading and writing on the front-end disk.

10. A distributed block storage system, comprising:
the front-end storage node of claim 9.

11. The system according to claim 10, wherein
the front-end storage node is located in a front-end storage node group, the system comprises at least one front-end storage node group, and each front-end storage node group of the at least one front-end storage node group comprises at least one front-end storage node; and
the system further comprises:
at least one rear-end storage node group, and each rear-end storage node group of the at least one rear-end storage node group comprises at least one rear-end storage node.

12. The system according to claim 11, wherein
each front-end storage node group comprises a plurality of front-end storage nodes, and the plurality of front-end storage nodes comprise: a master storage node and at least one slave storage node; and
when the front-end storage node is the master storage node, the master storage node is further used to: receive the request of reading and writing sent by the client; and, when the request of reading and writing is the request of writing, synchronize the to-be-written data carried in the request of writing to the slave storage node.

13. The system according to any of claims 10-12, wherein
the front-end disk is a solid state disk (SSD); and/or
the rear-end disk is a serial advanced technology attachment (SATA) disk.

14. A non-transient computer readable storage medium storing computer instructions to cause the computer to execute the method according to any of claims 1-6.

15. A computer program product comprising instructions to cause a processor to execute the method according to any of claims 1-6.
